# EUROPÄISCHE PATENTANMELDUNG

(11) **EP 2 615 145 A2**
(43) Veröffentlichungstag der Anmeldung: **17.07.2013**
(21) Anmeldenummer: 12195990.2
(22) Anmeldetag: 07.12.2012
(51) Int. Cl.: C09J 7/02

(54) **Verfahren zur Herstellung eines Verpackungsmaterials für korrosionsanfällige Gegenstände aus Metall**

(30) Priorität: 10.01.2012 DE 102012000255
(71) Anmelder: Mondi Gronau GmbH, 48599 Gronau (DE)
(72) Erfinder: Wunderlich, Hans, Dr., 29664 Walsrode (DE); Reinke, Sonja, 48485 Neukirchen (DE)
(74) Vertreter: Albrecht, Rainer Harald

(57) **Zusammenfassung**

Die Erfindung betrifft ein Verfahren zur Herstellung eines Verpackungsmaterials für korrosionsanfällige Gegenstände aus Metall, bei dem auf eine Kunststofffolie eine Klebestoffschicht aufgetragen wird, die von einem auf Isocyanaten basierenden Klebstoff gebildet wird und einen flüchtigen Korrosionsinhibitor (VCI) enthält. Erfindungsgemäß wird als Korrosionsinhibitor ein Wirkstoff eingesetzt, der durch Reaktion einer Aminkomponente und einer Carbonsäure unter Wasserabspaltung gebildet wird, wobei der Wassergehalt des VCI-Wirkstoffes derart eingestellt wird, dass die Aminkomponente beim Aushärten des Klebstoffes quantitativ in der Klebstoffschicht gebunden und/oder verbraucht wird.

## Beschreibung

Die Erfindung betrifft ein Verfahren zur Herstellung eines Verpackungsmaterials für korrosionsanfällige Gegenstände aus Metall, bei dem auf eine Kunststofffolie eine Klebstoffschicht aufgetragen wird, die von einem auf Isocyanaten basierenden Klebstoff gebildet wird und einen flüchtigen Korrosionsinhibitor (volatile corrosion inhibitor, VCI) enthält.

Ein Verpackungsmaterial der vorstehend genannten Art ist aus EP 2 184 162 A1 bekannt. Bei diesem Verpackungsmaterial wird eine einen Korrosionsinhibitor (VCI) enthaltende Klebstoffschicht auf eine Kunststofffolie aufgebracht, welche eine Außenschicht des Verpackungsmaterials bildet. Die Klebestoffschicht enthält als Korrosionsinhibitor eine chemische Verbindung aus Ethanolamin und einer Carbonsäure (Carboxylat und Amid), die einen Wassergehalt von ungefähr 2 % aufweist. Der Wassergehalt des Korrosionsinhibitors bewirkt ein Aufschäumen der Klebstoffschicht und folglich eine Oberflächenvergrößerung dieser Schicht. Auf diese Weise wird eine große Oberfläche zur Verfügung gestellt, von der aus die Wirksubstanz für den Korrosionsschutz verdampfen und sich auf der Oberfläche des zu schützenden Metallgegenstandes niederschlagen kann. Das Verpackungsmaterial zeichnet sich durch einen guten Korrosionsschutz aus. Nachteilig ist, dass toxikologisch bedenkliche Aminverbindungen freigesetzt werden.

Der Erfindung liegt daher das technische Problem zugrunde, ein Verfahren zur Herstellung eines Verpackungsmaterials für korrosionsanfällige Gegenstände aus Metall anzugeben, das die von der Verpackung umschlossenen Gegenstände wirksam vor Korrosionen schützt, ohne dabei Aminverbindungen freizusetzen.

Gegenstand der Erfindung und Lösung dieser Aufgabe ist ein Verfahren nach Anspruch 1.

Erfindungsgemäß wird als Korrosionsinhibitor ein Wirkstoff eingesetzt, der durch Reaktion eine Aminkomponente und einer Carbonsäure unter Wasserabspaltung gebildet wird, wobei der Wassergehalt des Wirkstoffes derart eingestellt wird, dass die Aminkomponente beim Aushärten des Klebstoffes quantitativ in der Klebstoffschicht gebunden und/oder verbraucht wird.

Vorzugsweise wird der Wirkstoff des Korrosionsinhibitors durch Reaktion von Ethanolamin und Caprylsäure gebildet. Ethanolamin und Caprylsäure reagieren beim Mischen zum entsprechenden Salz sowie zum Säureamid unter Wasserabspaltung, welches aus dem Reaktionsgefäß entfernt werden muss. Der Wassergehalt wird so weit reduziert, dass die Aminkomponente des Korrosionsinhibitors vom Isocyanat des Klebstoffes beim Aushärten verbraucht wird. Die Wirksubstanz enthält als Hauptkomponenten Ethanolammoniumoctanoat und N-(2-Hydroxyethyl)octanamid und weist einen Restwassergehalt von weniger als 1,0 Gew.-% auf.

Eine Mischung aus einem 1K-PUR-Klebstoff und der beschriebenen VCI-Wirksubstanz enthält kein Ethanolamin und setzt auch keines in die Gasphase frei. Die Mischung enthält keine weiteren primären, sekundären oder tertiären Amine und kein Nitrit, so dass von einem Nitrit- und Aminfreien Produkt gesprochen werden kann. Die ausgehärtete Klebstoffschicht besteht zum überwiegenden Teil aus Polyharnstoffverbindungen, die sich in gleicher oder ähnlicher Form auch bei der Aushärtung eines reinen 1 K-PUR-Klebstoffes bilden. Weiter enthält das ausgehärtete Produkt Anteile an Octansäure und geringe Anteile des im Werkstoff enthaltenen Amids. Das entsprechende Caboxylat des VCI-Wirkstoffes hat sich komplett mit den Komponenten des Klebstoffes umgesetzt. Die ausgehärtete Klebstoffschicht enthält folglich keine Gefahrstoffe und kann keine toxikologisch bedenklichen Stoffe freisetzen. Von der ausgehärteten Mischung wird lediglich Octansäure in meßtechnisch relevanter Konzentration in die Gasphase abgegeben. Die korrosionsinhibierende Wirkung beruht auf einem Freisetzen der Carbonsäure, z. B. Octansäure. Das nach dem erfindungsgemäßen Verfahren hergestellte Verpackungsmaterial zeichnet sich im Ergebnis durch eine überraschend gute Korrosionsschutzwirkung aus und ist umweltverträglich sowie toxikologisch unbedenklich, da in dem von der Verpackung umschlossenen Raum keine Aminverbindungen ausgasen, die sich auf der Oberfläche des verpackten Gegenstandes niederschlagen bzw. nach dem Öffnen der Verpackung in die Umwelt gelangen.

Zweckmäßig wird als Klebstoff ein chemisch abbindender Reaktionsklebstoff eingesetzt, der gemäß einer bevorzugten Ausführungsform bei Temperaturen von weniger als 80° C verarbeitet wird. Es empfiehlt sich, dass die Klebstoffschicht mit einem Auftragsgewicht von 1 g/m² bis 10 g/m² und vorzugsweise von 2 g/m² bis 6 g/m² appliziert wird. Die Klebstoffschicht kann gleichmäßig und flächig oder in einem Muster aus Klebstoffflächen und klebstofffreien Flächen auf die Kunststofffolie aufgebracht werden.

Der Wassergehalt des Korrosionsinhibitors wird so eingestellt, dass die zugesetzte Aminkomponente quantitativ beim Aushärten der Klebstoffschicht gebunden bzw. verbraucht wird. Die Klebstoffschicht wird gleichzeitig durch chemische Gasbildung aufgeschäumt wird und härtet in Form einer Schaumstruktur aus. Sollte der zulässige Wassergehalt nicht ausreichen, um die gewünschte Schaumstruktur zu erzeugen, besteht die Möglichkeit, die Struktur durch Einleitung eines Gases oder Zugabe von gaserzeugenden Substanzen zu bilden. Vorzugsweise weist die durch den ausgehärteten Klebstoff gebildete Schicht eine Schichtdicke auf, die das Zweifache bis Fünffache der Dicke des applizierten ungeschäumten Klebstoffs beträgt.

Der Wassergehalt des Korrosionsinhibitors liegt unterhalb eines Grenzwertes von 1,0 Gew.-%. Im Rahmen der erfindungsgemäßen Lehre kann der Korrosionsinhibitor insbesondere mit einem Wassergehalt zwischen 0,3 und 0,9 Gew.-% eingesetzt werden. Besonders bevorzugt ist ein Wassergehalt von etwa 0,8 Gew.-% bezogen auf die Menge des eingesetzten Korrosionsinhibitors. Der Wassergehalt des Korrosionsinhibitors ist so einzustellen, dass zum Binden der Aminkomponente im Klebstoff eine ausreichende Menge bzw. Anzahl von reaktiven Isocyanatgruppen zur Verfügung steht. Ein höherer Wassergehalt muss vor der erfindungsgemäßen Verwendung des Korrosionsinhibitors entfernt werden. Der Wasseranteil kann beispielsweise mittels eines Schleppmittels und/oder mittels eines Trockenmittels reduziert werden, bevor der VCI-Wirkstoff als Korrosionsinhibitor eingesetzt wird.

Die Zugabe des Korrosionsinhibitors erfolgt vorzugsweise in einer Menge von 5 Gew.-% bis 15 Gew.-% bezogen auf die Klebestoffmenge. Der Korrosionsinhibitor liegt bei Raumtemperatur insbesondere als kristalliner Feststoff vor. Auf diese Weise ist gewährleistet, dass der Korrosionsinhibitor funktionssicher und präzise zu dem Klebstoff dosiert werden kann.

Der Korrosionsinhibitor wird bei einer Temperatur von weniger als 60° C mit dem Klebstoff vermischt. Gemäß einer bevorzugten Ausgestaltung des erfindungsgemäßen Verfahrens wird der Korrosionsinhibitor auf eine Temperatur von 40° C bis 60° C erwärmt, so dass der Korrosionsinhibitor aufschmilzt und pumpfähig wird. Eine Verarbeitung des Korrosionsinhibitors ist möglich, ohne aufwendige Maßnahmen zur Arbeitssicherung bzw. zur Entfernung von aus dem Korrosionsinhibitor in die Atmosphäre freigesetzten Komponenten treffen zu müssen.

Der den Korrosionsinhibitor enthaltende Klebstoff wird zweckmäßig bei einer Temperatur von 30° C bis 60° C auf die Kunststofffolie appliziert.

Unter Verwendung des VCI-haltigen Klebestoffes kann eine gasdurchlässige Innenschicht auf die Kunststofffolie kaschiert werden, so dass der Klebstoff zwischen einer kunststofffolienseitigen Oberfläche der Innenschicht und der Kunststofffolie eingebettet ist und die Schichten miteinander verbindet. Die Innenschicht kann aus einem textilen Material oder einer porösen oder perforierten Folie bestehen. Der Klebstoff dringt vorzugsweise in die Innenschicht ein, ohne diese allerdings zu durchdringen. Ein direkter Kontakt zwischen dem Klebstoff und dem von dem Verpackungsmaterial umgebenen Gegenstand ist zu vermeiden, da dies die Ausbildung einer korrosionsinhibierenden Schutzschicht auf dem verpackten Gegenstand beeinträchtigt. Der Gegenstand sollte möglichst vollständig von einem Luftraum umgeben sein, indem sich eine Schutzatmosphäre ausbilden kann.

Eine vorteilhafte Ausgestaltung des erfindungsgemäßen Verfahrens sieht vor, dass die Innenschicht auf die Klebstoffschicht der Kunststoffschicht aufgelegt und der resultierende Schichtenverbund durch eine von zwei rotierenden Walzen gebildeten Walzenspalt geführt wird, wobei die Innenschicht gegen die Klebstoffschicht gedrückt und ein dreischichtiges Laminat erhalten wird.

Zur Durchführung des erfindungsgemäßen Verfahrens wird vorzugsweise ein lösungsmittelfreier Klebstoff eingesetzt, der auf aliphatischen und/oder aromatischen Isocyanaten basiert. Besonders bevorzugt wird als Klebstoff ein PUR-Klebstoff eingesetzt. Der Klebstoff weist zweckmäßig einen NCO-Gehalt von 8 bis 9 Gew.-% auf. Das im VCI-Wirkstoff enthaltene Wasser reagiert mit den Isocyanatgruppen des Klebstoffes unter Ausbildung von CO₂ . Das freigesetzte Kohlenstoffdioxid bewirkt ein Aufschäumen des Klebstoffs, wobei sich die Oberfläche der Klebstoffschicht durch eine Vielzahl von Gasbläschen vergrößert. Die Gasbläschen können Ausdehnungen im Nanometerbereich bis Mikrometerbereich aufweisen. Grundsätzlich ist es möglich, dass die Erzeugung der Gasbläschen im Klebstoff durch physikalische Verfahren, wie beispielsweise die Erzeugung eines Unterdrucks unterstützt bzw. beeinflusst wird. Dem Klebstoff können ferner gas- bzw. schaumbildende Zusätze zugemischt werden. Durch die vergrößerte Oberfläche des Klebstoffschaums wird eine schnelle und effektive Abgabe zumindest eines Teils des Korrosionsinhibitors bewirkt, wodurch auf dem verpackten Gegenstand zuverlässig und schnell ein Korrosionsschutz durch den Korrosionsinhibitor aufgebaut wird. Aus dem ausgehärteten Klebstoff kann auch noch nach einem Zeitraum von mehreren Tagen bis Wochen eine ausreichend große Menge an flüchtigen Bestandteilen der VCI-Wirksubstanz, insbesondere Carbonsäure, für den Korrosionsschutz der verpackten Gegenstände freigesetzt werden. Das mit dem erfindungsgemäßen Verfahren hergestellte Verpackungsmaterial verfügt daher in vorteilhafter Weise über eine lang andauernde Depotwirkung des Korrosionsinhibitors.

## Patentansprüche

1. Verfahren zur Herstellung eines Verpackungsmaterials für korrosionsanfällige Gegenstände aus Metall,
wobei auf eine Kunststofffolie eine Klebstoffschicht aufgetragen wird, die von einem auf Isocyanaten basierenden Klebstoff gebildet wird und einen flüchtigen Korrosionsinhibitor (VCI) enthält,
wobei als Korrosionsinhibitor ein Wirkstoff eingesetzt wird, der durch Reaktion einer Aminkomponente und einer Carbonsäure unter Wasserabspaltung gebildet wird, und
wobei der Wassergehalt des Wirkstoffs derart eingestellt wird, dass die Aminkomponente beim Aushärten des Klebstoffs quantitativ in der Klebstoffschicht gebunden und/oder verbraucht wird.

2. Verfahren nach Anspruch 1, wobei der Wirkstoff des Korrosionsinhibitors durch Reaktion von Ethanolamin und Caprylsäure gebildet wird.

3. Verfahren nach Anspruch 1 oder 2, wobei der Wassergehalt des Wirkstoffes auf einen Wert zwischen 0,3 Gew.-% und 1,0 Gew.-% eingestellt wird.

4. Verfahren nach einem der Ansprüche 1 bis 3, wobei der Korrosionsinhibitor in einer Menge von 5 Gew.-% bis 15 Gew.-% bezogen auf die Klebstoffmenge mit dem Klebstoff vermischt wird.

5. Verfahren nach einem der Ansprüche 1 bis 4, wobei ein Klebstoff mit einem NCO-Gehalt zwischen 8 Gew.-% und 9 Gew.-% verwendet wird.

6. Verfahren nach einem der Ansprüche 1 bis 5, wobei der Korrosionsinhibitor bei einer Temperatur von weniger als 60° C mit dem Klebstoff vermischicht wird.

7. Verfahren nach einem der Ansprüche 1 bis 6, wobei der den Korrosionsinhibitor enthaltende Klebstoff bei einer Temperatur von 30° C bis 60° C auf die Kunststofffolie appliziert wird.

8. Verfahren nach einem der Ansprüche 1 bis 7, wobei eine gasdurchlässsige Innenschicht unter Verwendung des VCI-haltigen Klebstoffes auf die Kunststofffolie aufkaschiert wird.

9. Verfahren nach einem der Ansprüche 1 bis 8, wobei als Klebstoff ein PUR-Klebstoff eingesetzt wird.
